# EUROPEAN PATENT SPECIFICATION

(11) **EP 2 684 439 B1**
(45) Date of publication and mention of the grant of the patent: **01.06.2016**
(21) Application number: 13175743.7
(22) Date of filing: 09.07.2013
(51) Int. Cl.: A01D 34/82, A01D 34/74

(54) **Machine for mowing lawns and gardens with an adjustable articulated frame**
Maschine zum Mähen von Rasen und Gärten mit einem einstellbaren, gelenkigen Rahmen
Machine pour la tonte de pelouses et jardins avec un châssis articulé réglable

(30) Priority: 12.07.2012 IT MI20121216
(43) Date of publication of application: 15.01.2014
(73) Proprietor: GGP Italy S.p.A., 31033 Castelfranco Veneto (TV) (IT)
(72) Inventor: D'Agostini, Mauro, 35018 San Martino di Lupari PD (IT)
(74) Representative: Mittler, Enrico

(56) References cited:
- US-A- 3 292 351
- US-A- 3 694 855
- US-A1- 2002 084 117
- US-A1- 2006 053 762
- US-A1- 2011 302 893

## Description

The present invention relates to a machine for mowing lawns and gardens comprising an articulated frame adjustable by intervening on a locking device.

A machine for mowing lawns and gardens is a lawn mower capable of cutting, mowing and mulching grass by means of a rotating blade, hinged to the middle line, having a given length of the ends sharp.

A lawn mower comprises a self-bearing structure made of plastic, steel plate or die-cast aluminum supported by wheels and manually pushed by means of a handlebar provided with a lever for operating and starting a motor connected to the blade.

Various procedures for adjusting the arrangement of a lawn mower are known. One of these consists in inclining the self-bearing structure with respect to the ground allowing the rotating blade connected to the self-bearing structure to cut, and at the same time, create the optimal conditions for ejecting the grass. Another adjustment relates to the inclination of the handlebar with respect to the self-bearing structure, allowing the operator to push or tow the mower with minimum effort.

Adjustment systems of the arrangement of a lawn mower involve at least one pair of connection articulations between components of the frame or of the self-bearing structure. Each joint is formed by a hinge node created by the convergence of at least two rods, or a hinge node of a rod and a load-bearing structure. Each joint is provided with an arrangement locking device adapted to intervene during the step of operating.

The prior art includes a number of documents related to simple locking systems. Patent US2011302894 describes a lawn mower comprising a pair of adjustment devices at the joints between the gripping portion and the frame to facilitate adjusting of the position of the handle with respect to the frame. Each adjustment device of the handle of the lawn mower comprises a first body connected to the gripping portion, a second body connected to a side of the frame and a locking member contrasted by an elastic spring. The first and the second body engage each other by means of respective toothed or stepped surfaces. Each adjustment device of the lawn mower handle is locked by a respective locking member.

Patent US3292351 describes a device for adjusting the arrangement of a lawn mower wherein the locking is obtained by means of an appropriately shaped and elastically contrasted central rod capable of simultaneously engaging the side edges of the machine frame by means of grooves made on two shaped plates.

US2002/084117 describes a lawn mower with a height adjustment device.

The known solutions are complex from a construction point of view and not very practical for users who want to change the arrangement of the machine rapidly.

It is an object of the present invention to make a lawn mower machine for trimming lawns and gardens with an adjustment and arrangement locking device which is simple, compact and requires minimum effort by the operator.

A further object is to be able to easily install the new device in the compartment obtained in the frame of the lawn mower.

In accordance with the invention, these and other objects are reached by a lawn mower machine as described in claim 1.

These and other features of the present invention will be further apparent from the following detailed description of an embodiment thereof, shown by way of non-limitative example in the accompanying drawings, in which:
FIG. 1 shows a partial axonometric view of a lawn mower provided with a locking device of an articulated frame in the locked frame position which is the object of the present invention;
FIG. 2 shows an enlarged view in FIG. 1 of some details comprised in circle A of the locking device of an articulated frame;
FIG. 3 shows a partial axonometric view of a lawn mower provided with a locking device of an articulated frame in the locked frame position which is the object of the present invention;
FIG. 4 shows an enlarged view in FIG. 3 of some details comprised in circle B of the locking device of an articulated frame;
FIG. 5 shows a plan view of the internal architecture of a locking mechanism of an articulated frame in the locked frame position which is the object of the present invention;
FIG. 6 shows a plan view of the internal architecture of the mechanism in FIG. 5 in the released frame position which is the object of the present invention;
FIG. 7 shows a section view of the details taken along line VII-VII in FIG. 6;
FIG. 8 shows a plan view of the external architecture of the locking mechanism of an articulated frame in the locked frame position which is the object of the present invention;
FIG. 9 shows a plan view of the external architecture of the locking mechanism of an articulated frame in the unlocked frame position which is the object of the present invention.

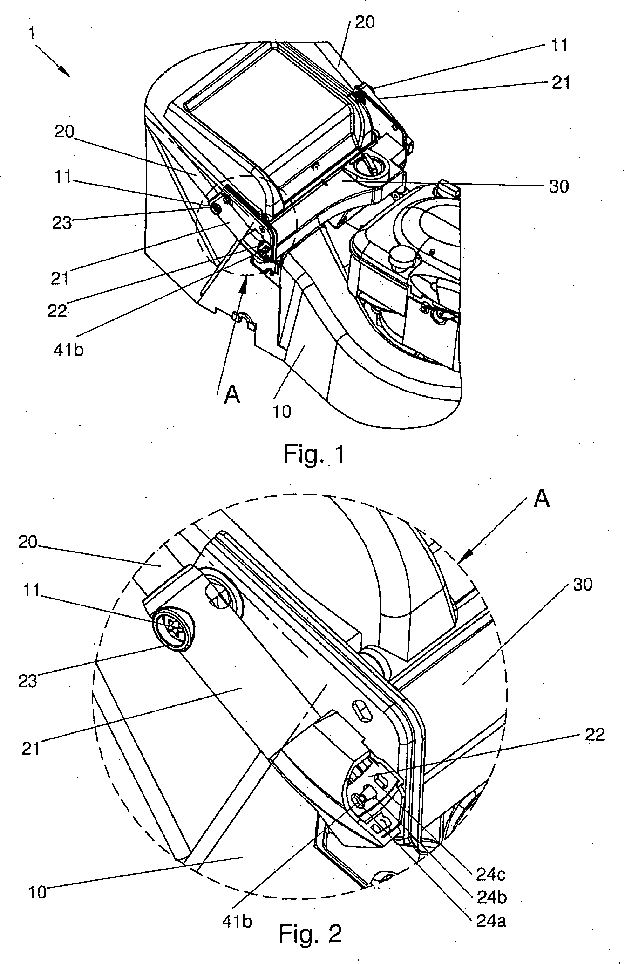

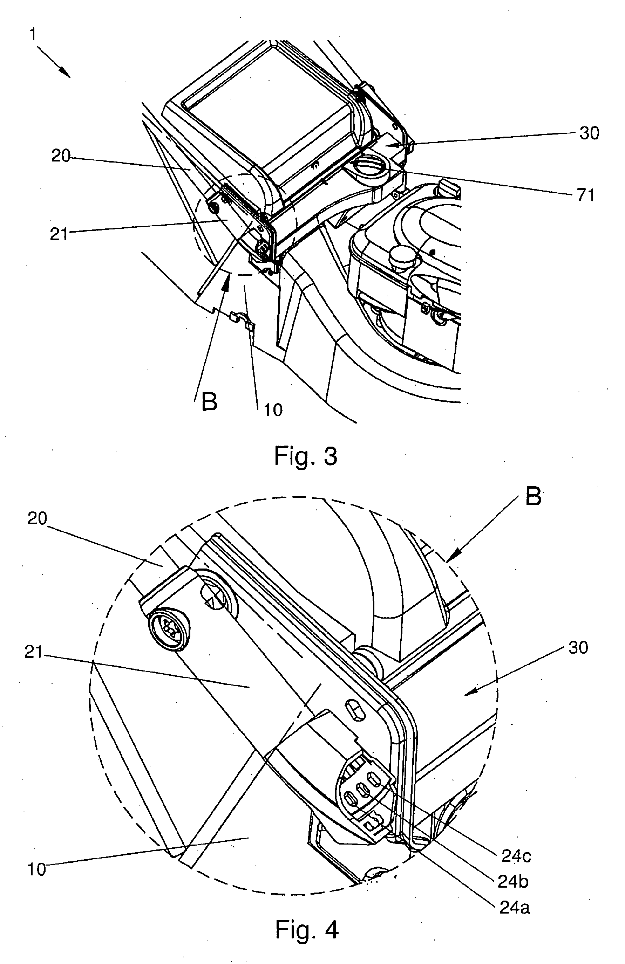

With reference to figures 1, 2, 3 and 4, a lawn mower 1 essentially comprises a body 10 supported by wheels (not shown) and connected to a handlebar (not shown) by means of a pair of rods 20 having one end inserted in a tubular seat 21 comprising a plate 22.

Each rod 20 is connected to the body 10 by means of a first pin 11, fixed in integral manner to each side of the body 10, and a second pin 41a, 41b, belonging to a locking device 30, integral with the body 10.

The first pin 11, permanently inserted in a hole 23 made in the tubular seat 21, allows the rod 20 to turn. The second pin 41a, 41b inserted in a hole of the plate 22, chosen from 24a, 24b, 24c, allows the rod 20 to assume an inclined position. The holes 24a, 24b, 24c arranged on an arc of a circle of radius corresponding to the distance between the centers of the pins 11 e 41a, 41b, define a particular arrangement of the rod 20 needed to facilitate the manual pushing or towing of the lawn mower.

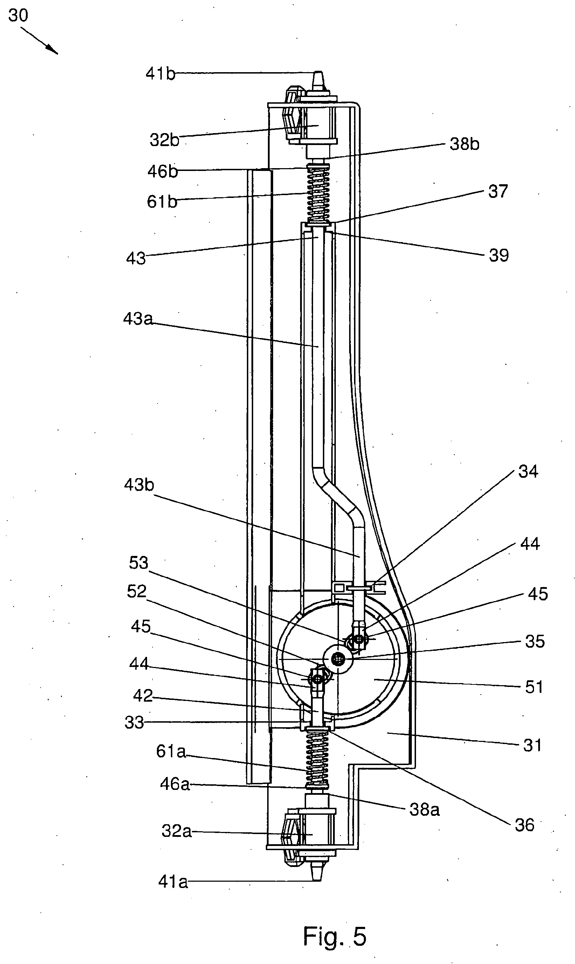

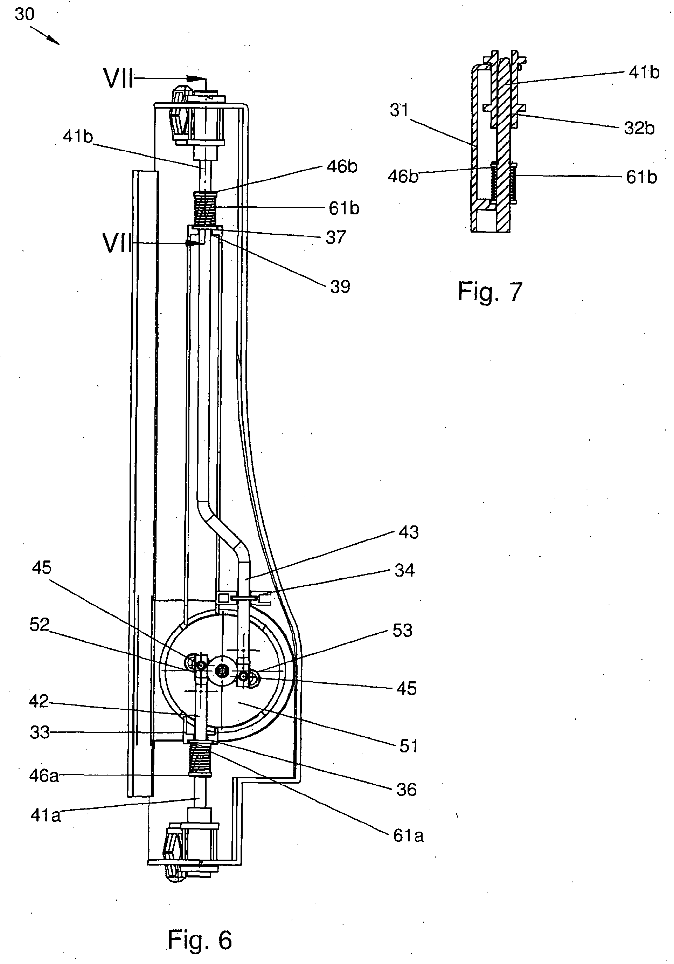

With reference to figures 5, 6 and 7, the locking device 30 comprises a casing 31 either fixed to or integral with the body 10. The casing 31 is provided with a cylindrical seat 32a, 32b along which the pair of lock pins 41a, 41b slide.

The lock pins 41a, 41b, are connected, respectively, to a first rod 42, sliding along a first cylindrical guide 33, and to a second rod 43, sliding along a second cylindrical guide 39, coaxial to the cylindrical guide 33, and a cylindrical guide 34, the latter being parallel and offset with respect to the cylindrical guide 39.

The rod 43 is formed by two cylindrical sections 43a, 43b parallel and offset so that the sliding of the respective lock pin 41b causes the sliding of the rod segment 43b along the cylindrical guide 34.

Each guided end of the rods 42 and 43 comprises an eyelet 44 occupied by a protruding pin 45.

A disc 51, hinged in a center 35 equidistant with respect to the parallel axes of the cylindrical guides 33 and 34, comprises two grooves 52 and 53 protruding in radial sense and offset by a flat angle with respect to the rotation center 35 of the disc 51.

Each protruding pin 45, centered in the eyelet 44 of the end of the rods 42 and 43, runs along the radial grooves 52 and 53, thus transmitting the axial component of the rotation of the disc 51 with respect to the lock pin 41a, 41b.

A pair of axial compression springs 61a, 61b connected to the casing 31 by means of abutting walls 36, 37 pushes each lock pin 41a, 41b, by pressing a collar 46a, 46b, integral with each lock pin 41a, 41b against a respective striker wall 38a, 38b integral with the casing 31.

Each axial compression spring 61a, 61b makes each lock pin 41a, 41b lay in the protruding position, locking the respective rod 20 through one of the holes 24a, 24b, 24c of the plate 22.

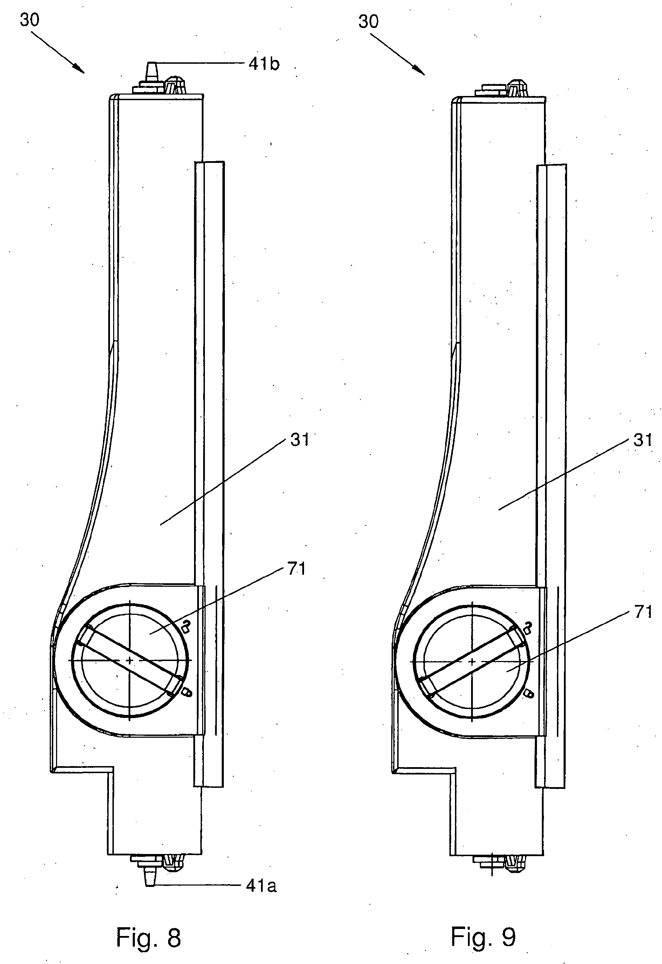

The disc 51 is axially connected to a knob 71 (figures 8 and 9).

By turning the knob 71, the disc 51 moves dragging each protruding pin 45 along the respective radial groove 52 and 53.

The rod 42 and the rod 43 translate along the respective cylindrical guide 33 and 34 making the respective lock pin 41a, 41b retract.

Each compression spring 61a, 61b shortens and is squeezed between the collar 46a, 46b integral with each squeezing pin 41a, 41b and the respective striker wall 36 and 37.

The knob 71, maintained in the released position by the operator, keeps the two lock pins 41a, 41b in the retracted position, allowing the operator to change the inclination of the rods 20 making them turn with respect to the center of the pair of pins 11, to seek a new arrangement coinciding with the coupling of the lock pins 41a, 41b with one of the holes 24a, 24b, 24c.

The operator releases the knob 71 after having found the desired arrangement. The potential elastic energy accumulated by the two compression springs 61a, 61b is discharged onto the mechanism formed by the rods 42 and 43 to return the disc 51 to the locking position corresponding to the lock pins 41a, 41b in protruding position.

The locking device of an articulated frame belonging to a machine for mowing lawns and gardens of the type described above reaches the objectives set at the beginning of the present description.

In particular, the described device allows to adjust the arrangement of the frame and to lock it by intervening on the knob 71, while the inclination of the handlebar connected to the rods 20 is adjusted. Having reached the desired inclination, the operator releases the knob 71 and locks the two joints.

The locking device 30 contained in the casing 31 is compact and capable of developing an elastic force which can be contrasted with minimum effort by the operator by rotating the knob 71, ensuring the locking of the frame according to a different arrangement, by adopting lock pins 41a, 41b coupled with precision in cylindrical seats made in thick solid plates 22.

The locking device 30 is easy to assemble with respect to the body of a lawn mower and is adapted to any type of adjustment of the arrangement of the machine, such as the adjustment of the inclination of the body with respect to the ground or of the handlebar with respect to the body.

In a variant of the architecture of the locking device 30, contained in the casing 31 and comprising lock pins 41a, 41b controlled in synchronous manner by a mechanism connected to a central disc 51, respectively, lock pins 41a, 41b are controlled by a double connecting rod-crank mechanism offset of half a turn, in which said pair of connecting rods connects the lock pins 41a, 41b to the plate 51 fitted in the centre.

## Claims

1. A lawn mower machine (1) comprising an articulated frame adjustable by means of a locking device (30) operating on a pair of rods (20) connected to a handlebar and hinged with respect to a body (10) by means of a plate (22), said locking device (30) comprising a pair of lock pins (41a, 41b) engaged with said pair of rods (20) and connected to respective further rods (42, 43) reversibly and simultaneously actuated by means of a disc (51), **characterized in that** said lock pins (41a, 41b) are connected, respectively, to a first rod (42) sliding along a first cylindrical guide (33), and to a second rod (43) sliding along a second cylindrical guide (34), one end of the rods (42, 43) being connected to the disc (51) by means of grooved guides (52, 53) projecting in radial offset manner by a flat angle with respect to the center of rotation (35).

2. A machine according to claim 1, **characterized in that** the second rod (43) is formed by two parallel cylindrical sections (43a, 43b) offset so that the sliding of the respective lock pin (41b) causes the sliding of the rod segment (43b) along the cylindrical guide (34).

3. A machine according to any one of the preceding claims, **characterized in that** the locking device (30) comprises a pair of axial compression springs (61a, 61b) connected to the body (10) by means of abutting walls (36, 37) and pushes each lock pin (41a, 41b) by pressing a collar (46a, 46b) against a respective striker wall (38a, 38b) integral with the body (10).

4. A machine according to any one of the preceding claims, **characterized in that** each said lock pin (41a, 41b) slides along a cylindrical seat (32a, 32b) of the body (10), and **in that** the rotation center (35) of the disc (51) is equidistant from the axes of the cylindrical guides (33, 34).

## Patentansprüche

1. Rasenmähermaschine (1), die einen gelenkigen Rahmen aufweist, der mittels einer Arretiervorrichtung (30), die sich auf ein Paar von Stangen (20), die mit einer Griffstange verbunden sind und mittels einer Platte (22) bezüglich eines Körpers (10) klappbar sind, auswirkt, einstellbar ist, wobei die Arretiervorrichtung (30) ein Paar von Sperrstiften (41a, 41b) aufweist, die mit dem Paar von Stangen (20) im Eingriff sind, und mit jeweiligen weiteren Stangen (42, 43), die reversibel und gleichzeitig mittels einer Scheibe (51) betätigt werden, verbunden sind,
**dadurch gekennzeichnet, dass** die Sperrstifte (41a, 41b) jeweils mit einer ersten Stange (42), die entlang einer ersten zylindrischen Führung (33) gleitet, und mit einer zweiten Stange (43), die entlang einer zweiten zylindrischen Führung (34) gleitet, verbunden sind, wobei ein Ende der Stangen (42, 43) mittels Rillenführungen (52, 53), die in einer um einen gestreckten Winkel radial gegeneinander versetzten Weise bezüglich des Rotationszentrums (35) vorstehen, mit der Scheibe (51) verbunden ist.

2. Maschine gemäß Anspruch 1, **dadurch gekennzeichnet, dass**
die zweite Stange (43) aus zwei parallelen zylindrischen Abschnitten (43a, 43b) gebildet ist, die so versetzt sind, dass das Gleiten des jeweiligen Sperrstifts (41b) das Gleiten des Stabsegments (43b) entlang der zylindrischen Führung (34) auslöst.

3. Maschine gemäß einem der vorangehenden Ansprüche,
**dadurch gekennzeichnet, dass** die Arretiervorrichtung (30) ein Paar von axialen Druckfedern (61a, 61b) aufweist, die mittels Stoßwänden (36, 37) mit dem Körper (10) verbunden sind, und jeden Sperrstift (41a, 41b) durch Drücken eines Kragens (46a, 46b) gegen eine jeweilige mit dem Körper (10) integrale Abstreifwand (38a, 38b) schieben.

4. Maschine gemäß einem der vorangehenden Ansprüche,
**dadurch gekennzeichnet, dass** jeder der Sperrstifte (41a, 41b) entlang eines zylindrischen Sitzes (32a, 32b) des Körpers (10) gleitet, und dass das Rotationszentrum (35) der Scheibe (51) äquidistant zu den Achsen der zylindrischen Führungen (33, 34) ist.

## Revendications

1. Machine pour tondre la pelouse (1) comprenant un châssis articulé ajustable au moyen d'un dispositif de blocage (30) agissant sur une paire de tiges (20) raccordées à un guidon et articulées par rapport à un corps (10) au moyen d'une plaque (22), ledit dispositif de blocage (30) comprenant une paire de broches de blocage (41a, 41b) mises en prise avec ladite paire de tiges (20) et raccordées à des tiges supplémentaires (42, 43) respectives, actionnées de manière réversible et simultanée au moyen d'un disque (51), **caractérisée en ce que** lesdites broches de blocage (41a, 41b) sont raccordées, respectivement, à une première tige (42) coulissant le long d'un premier guide cylindrique (33) et à une seconde tige (43) coulissant le long d'un second guide cylindrique (34), une extrémité des tiges (42, 43) étant raccordée au disque (51) au moyen de guides rainurés (52, 53) faisant saillie d'une manière radiale décalée selon un angle plat par rapport au centre de rotation (35).

2. Machine selon la revendication 1, **caractérisée en ce que** la seconde tige (43) est formée par deux sections cylindriques parallèles (43a, 43b) décalées de sorte que le coulissement de la broche de blocage (41b) respective provoque le coulissement du segment de tige (43b) le long du guide cylindrique (34).

3. Machine selon l'une quelconque des revendications précédentes, **caractérisée en ce que** le dispositif de blocage (30) comprend une paire de ressorts de compression axiaux (61a, 61b) raccordés au corps (10) au moyen de parois de butée (36, 37) et pousse chaque broche de blocage (41a, 41b) en comprimant un collier (46a, 46b) contre une paroi de frappe (38a, 38b) respective solidaire avec le corps (10).

4. Machine selon l'une quelconque des revendications précédentes, **caractérisée en ce que** chacune desdites broches de blocage (41a, 41b) coulisse le long d'un siège cylindrique (32a, 32b) du corps (10) et **en ce que** le centre de rotation (35) du disque (51) est à équidistance des axes des guides cylindriques (33, 34).
